# EUROPEAN PATENT SPECIFICATION

(11) **EP 4 531 040 B1**
(45) Date of publication and mention of the grant of the patent: **18.11.2026**
(21) Application number: 23201023.1
(22) Date of filing: 29.09.2023
(51) Int. Cl.: G10L 19/16, G10L 25/30, G10L 19/18, G06N 3/0475

(54) **AUDIO DEVICE WITH CODEC INFORMATION-BASED PROCESSING AND RELATED METHOD**
AUDIOVORRICHTUNG MIT CODEC-INFORMATIONSBASIERTER VERARBEITUNG UND ZUGEHÖRIGES VERFAHREN
DISPOSITIF AUDIO AVEC TRAITEMENT BASÉ SUR DES INFORMATIONS DE CODEC ET PROCÉDÉ ASSOCIÉ

(43) Date of publication of application: 02.04.2025
(73) Proprietor: GN Hearing A/S, 2750 Ballerup (DK)
(72) Inventor: MOWLAEE, Pejman, Ballerup (DK); NOZAL, Diego Caviedes, Ballerup (DK)
(74) Representative: GN Store Nord A/S

(56) References cited:
- WO-A1-2022/129146
- US-A1- 2021 327 445

## Description

The present disclosure pertains to the field of audio devices and methods of operating audio devices, and in particular to audio devices with codec information-based processing and related methods.

### BACKGROUND

In audio communication, the increasing number of audio devices, such as wireless audio devices, competing to share the same available "air time" and the effective bandwidth available makes it challenging to fit all the audio devices in the available bandwidth. This may result in delays, dropouts and, in general, a higher possibility to have a poor audio communication experience. In order to fit more audio devices at the same time in an available bandwidth, it is possible to reduce the bit-rate of the audio. Encoding and decoding of audio signals is a technique used for reducing the size of audio signals, e.g., by reducing the bit-rate of the audio. However, the encoding and decoding process may reduce the quality of the audio signal e.g., due to lossy compression and/or undesired features such as artifacts. It is challenging to encode and decode an audio signal while maintaining the quality of the audio signal. This may in particular be an issue for users of audio devices in the communication sector who are using and/or wearing their audio device for a whole working day, such as users working in call centers. By providing a low quality of communication and end-user experience it leads to unconcentrated users and, consequently, a low working effectiveness. However, it is challenging to preserve high audio quality while using low or very low bit-rates.

US 2021/327445A1 relates a method of low-bitrate coding of audio data and generating enhancement metadata for controlling audio enhancement of the low-bitrate coded audio data at a decoder side, including the steps of: (a) core encoding original audio data at a low bitrate to obtain encoded audio data; (b) generating enhancement metadata to be used for controlling a type and/or amount of audio enhancement at the decoder side after core decoding the encoded audio data; and (c) outputting the encoded audio data and the enhancement metadata.

WO 2022/129146A1 relates a method for setting up a decoder for generating processed audio data from an audio bitstream, the decoder comprising a Generator of a Generative Adversarial Network, GAN, for processing of the audio data, wherein the method includes the steps of (a) pre-configuring the Generator for processing of audio data with a set of parameters for the Generator, the parameters being determined by training, at training time, the Generator using the full concatenated distribution; and (b) pre-configuring the decoder to determine, at decoding time, a truncation mode for modifying the concatenated distribution and to apply the determined truncation mode to the concatenated distribution.

### SUMMARY

Accordingly, there is a need for audio devices with codec information-based processing and methods of operating an audio device, which may mitigate, alleviate, or address the existing shortcomings and may provide improved signal processing.

The invention provides an audio device as defined by the appended independent claim 1.

The audio device is configured to act as a receiver device. The audio device comprises an interface, an audio speaker, and a microphone. The audio device comprises one or more processors and a memory. The one or more processors comprise a decoder, a first signal processor, a second signal processor, and an audio conditioner, wherein the first signal processor is configured to operate according to a generative model for generative-based signal processing and the second signal processor is configured to operate according to a non-generative model for non-generative-based signal processing. The audio device is configured to obtain an audio input signal from a transmitter device, where the audio input signal is an encoded audio input signal encoded based on one or more encoder parameters. The audio device is configured to decode the audio input signal using the decoder and one or more decoder parameters for provision of a decoder output signal, the audio conditioner configured to process the decoder output signal for provision of one or more audio features. The audio device is configured to obtain codec information indicative of the one or more encoder parameters and/or the one or more decoder parameters. The audio device is configured to process, using the first signal processor and based on the codec information, the decoder output signal for provision of a first signal processor output signal. To process the decoder output signal using the first signal processor comprises to process the decoder output signal using the first signal processor by applying the generative model for codec information-based processing. To process the decoder output signal using the first signal processor by applying the generative model for codec information-based processing may comprise applying a diffusion-based processing of the decoder output signal. To process the decoder output signal using the first signal processor comprises to process the decoder output signal based on the one or more audio features, the second signal processor being configured to process a second signal processor input signal for provision of a second signal processor output signal, wherein the second signal processor input signal is based on the decoder output signal, and the audio device is configured to process the decoder output signal using the second signal processor. The audio device is configured to determine signal-to-noise ratio information based on the decoder output signal, and wherein to process the decoder output signal comprises to process the decoder output signal based on the signal-to-noise ratio information, and the audio device comprises a mixer configured to combine the first signal processor output signal and the second signal processor output signal for provision of an audio output signal, wherein to combine the first signal processor output signal and the second signal processor output signal is based on the signal-to-noise ratio information.

The invention provides a method of operating an audio device configured to act as a receiver device, as defined by the appended independent claim 7, the audio device comprising an interface, an audio speaker, and a microphone, the audio device comprising one or more processors and a memory, the one or more processors comprising a decoder, a first signal processor, a second signal processor, and an audio conditioner, wherein the first signal processor is configured to operate according to a generative model for generative-based signal processing, and wherein the second signal processor is configured to operate according to a non-generative model for non-generative-based signal processing. The method comprises obtaining an audio input signal from a transmitter device, where the audio input signal is an encoded audio input signal encoded based on one or more encoder parameters. The method comprises decoding the audio input signal, e.g., using the decoder and one or more decoder parameters for provision of a decoder output signal. The method comprises processing, using the audio conditioner of the one or more processors of the audio device, the decoder output signal for provision of one or more audio features. The method comprises obtaining codec information indicative of the one or more encoder parameters and/or the one or more decoder parameters. The method comprises processing, using the first signal processor and based on the codec information, the decoder output signal for provision of a first signal processor output signal, wherein processing the decoder output signal, using the first signal processor, comprises processing the decoder output signal, using the first signal processor, by applying the generative model for codec information-based processing. Processing the decoder output signal using the first signal processor comprises processing the decoder output signal based on the one or more audio features. The method comprises processing, using the second signal processor, a second signal processor input signal for provision of a second signal processor output signal, wherein the second signal processor input signal is based on the decoder output signal, and processing, using the second signal processor, the decoder output signal. The method comprises determining signal-to-noise ratio information based on the decoder output signal, and processing the decoder output signal comprises processing the decoder output signal based on the signal-to-noise ratio information. The audio device comprises a mixer, and the method comprises combining, using the mixer, the first signal processor output signal and the second signal processor output signal for provision of an audio output signal, wherein combining the first signal processor output signal and the second signal processor output signal is based on the signal-to-noise ratio information.

Preferred embodiments of the invention are set forth in the appended dependent claims.

The disclosed system, audio devices, and related methods provide improved signal processing of input signals comprising audio. **In** other words, the present disclosure may provide improved codec information-based processing of input signals comprising audio. It may be appreciated that the present disclosure provides informed signal processing of input signals comprising audio. For example, the present disclosure may provide informed enhancement of speech signals, e.g., based on codec information. It may be appreciated that the present disclosure may provide speech enhancement of input signals comprising audio. The present disclosure preserves high audio signal quality while using low or very low bit-rates. This may in turn allow a large number of audio devices on a limited bandwidth while keeping a high audio communication quality.

An advantage of the present disclosure is that the use of a generative approach, such as a generative model, avoids the limitation of merely adjusting an original signal as in a masked-based approach. Instead, a generative approach allows to generate a new signal.

Advantageously, the disclosed method may enable an improved quality of a decoded audio signal, such as by reducing undesired features of an audio signal, such as artifacts, which may have been generated during encoding and/or decoding.

It may be appreciated that the present disclosure may provide improved signal processing, such as improved tuning of a signal processing pipeline. The signal processing may be improved based one or more encoder parameters and/or one or more decoder parameters. In turn, the present disclosure may provide improved output signal(s), such as improved audio output quality at the receiver-end, such as for a receiver-end user. In other words, the present disclosure may provide an improved audio quality at the receiver-end, e.g., during a call or a meeting.

An advantage of the present disclosure is that an improved communication experience, such as speech communication, is achieved between a transmitter side, such as a transmitter audio device, and a receiver side, such as a receiver audio device. For example, the present disclosure may provide an improved communication experience for telephone and/or conference calls, e.g., using a headset, a speakerphone, and/or a video bar.

### BRIEF DESCRIPTION OF THE DRAWINGS

The above and other features and advantages of the present disclosure will become readily apparent to those skilled in the art by the following detailed description of examples thereof with reference to the attached drawings, in which:
Fig. 1 schematically illustrates an example system according to the present disclosure,
Figs. 2A-B is a flow diagram of an example method according to the present disclosure, and
Fig. 3 is a flow diagram of an example method according to the present disclosure.

### DETAILED DESCRIPTION

Various examples and details are described hereinafter, with reference to the figures when relevant. It should be noted that the figures may or may not be drawn to scale and that elements of similar structures or functions are represented by like reference numerals throughout the figures. It should also be noted that the figures are only intended to facilitate the description of the examples. They are not intended as an exhaustive description of the disclosure or as a limitation on the scope of the disclosure. In addition, an illustrated example needs not have all the aspects or advantages shown. An aspect or an advantage described in conjunction with a particular example is not necessarily limited to that example and can be practiced in any other examples even if not so illustrated, or if not so explicitly described.

The figures are schematic and simplified for clarity, and they merely show details which aid understanding the disclosure, while other details have been left out. Throughout, the same reference numerals are used for identical or corresponding parts.

An audio device is disclosed. The audio device is configured to act as receiver device. In other words, the audio device is configured to receive input signals from an audio device configured to act as a transmitter device. The audio device as disclosed herein may comprise an interface, an audio speaker, one or more microphones, one or more processors, and a memory. The one or more processors comprise a decoder and a first signal processor.

A decoder as disclosed herein, may be implemented as hardware and/or software on the audio device. A decoder as disclosed herein may be seen as a module configured to convert and/or decode an input signal from a transmitter device to a decoder output signal. In other words, a decoder may be configured to decompress an input signal from a transmitter device. For example, a decoder may be configured to convert and/or decode an input signal from a transmitter device to an audio signal.

The audio device may be seen as an audio device configured to obtain input signals, such as audio signals, output audio signals, and process input signals, such as audio signals. The audio device may be seen as or comprise a headset, a speakerphone, and/or a video-bar. The audio device may for example be seen as a conference audio device, e.g., configured to be used by a party (such as one or more users at a near-end) to communicate with one or more other parties (such as one or more users at a far-end).

The audio device configured to act as a receiver device may also be configured to act as a transmitter device when transmitting back an output signal to the far-end. The receiver audio device and the transmitter audio device may therefore switch between being receiver audio device and transmitter audio device. The audio device may be seen as a smart audio device. The audio device may be used for a conference and/or a meeting between two or more parties being remote from each other. The audio device may be used by one or more users in a vicinity of where the audio device is located, also referred to as a near-end. The audio device may be configured to output, such as using the audio speaker and based on the input signal, an audio device output at the receiver end. The audio device output may be seen as an audio output signal that is an output of the audio speaker at a near-end where the audio device and the user(s) of the audio device are located.

In one or more examples, the audio device may be seen as an enhancer device, such as an audio enhancer device. An enhancer device may be seen as a device for enhancing an audio quality of an encoded/decoded audio signal for provision of an enhanced audio output. For example, an enhancer device may enhance one or more audio parameters of an encoded/decoded audio signal for provision of an enhanced audio output based on codec information.

The audio device may be a single audio device. The audio device may be seen as a plurality of interconnected audio devices, such as a system, e.g., an audio device system. The system may comprise one or more users. It is noted that the term speaker may be seen as the user of the audio device.

In one or more example audio devices, the interface comprises a wireless transceiver, also denoted as a radio transceiver, and an antenna for wireless transmission and reception of an input signal, such as an audio signal, such as for wireless transmission of an output signal and/or wireless reception of a wireless input signal. The audio device may be configured for wireless communication with one or more electronic devices, such as another audio device, a smartphone, a tablet, a computer and/or a smart watch. The audio device optionally comprises an antenna for converting one or more wireless input audio signals to antenna output signal(s). The audio device system and/or the audio device, may be configured for wireless communications via a wireless communication system, such as short-range wireless communications systems, such as Wi-Fi, Bluetooth, Zigbee, IEEE 802.11, IEEE 802.15, infrared and/or the like.

The audio device system and/or the audio device, may be configured for wireless communications via a wireless communication system, such as a 3GPP system, such as a 3GPP system supporting one or more of: New Radio, NR, Narrow-band IoT, NB-IoT, and Long Term Evolution - enhanced Machine Type Communication, LTE-M, millimeter-wave communications, such as millimeter-wave communications in licensed bands, such as device-to-device millimeter-wave communications in licensed bands.

In one or more example audio device systems and/or audio devices, the interface of the audio device comprises one or more of: a Bluetooth interface, Bluetooth low energy interface, and a magnetic induction interface. For example, the interface of the audio device may comprise a Bluetooth antenna and/or a magnetic interference antenna.

The audio device system may be seen as an audio communication system. The system may be seen as a communication system for performing calls, such as audio and/or video calls. The system, such as communication system, may be seen as a system with codec information-based processing. The audio device system may comprise an audio device, such as the audio device configured to act as a receiver device as disclosed herein and a transmitter audio device, such as the audio device configured to act as a transmitter device as disclosed herein.

In one or more example audio devices, the interface may comprise a connector for wired communication, via a connector, such as by using an electrical cable. The connector may connect one or more microphones to the audio device. The connector may connect the audio device to an electronic device, e.g., for wired connection. The connector may be seen as an electrical connector, such as a physical connector for connecting the audio device via an electrical wire to another device.

The one or more interfaces can be or comprise wireless interfaces, such as transmitters and/or receivers, and/or wired interfaces, such as connectors for physical coupling. For example, the audio device may have an input interface configured to receive data, such as a microphone input signal. In one or more example audio devices, the audio device can be used for all form factors in all types of environments, such as for headsets and/or video conference equipment. For example, the audio device may not have a specific microphone placement requirement. In one or more example audio devices, the audio device may comprise an external microphone.

An audio device configured to act as a receiver device is disclosed. The audio device comprising an interface, an audio speaker, and a microphone, the audio device comprising one or more processors and a memory, the one or more processors comprising a decoder and a first signal processor. The first signal processor is configured to operate according to a generative model for generative-based signal processing.

The audio device is configured to obtain an audio input signal from a transmitter device, where the audio input signal is an encoded audio input signal encoded based on one or more encoder parameters.

The audio device is for example configured to obtain (such as receive and/or retrieve) the audio input signal via a wired and/or wireless connection to the transmitter device. The input audio signal may for example be encoded by the transmitter device. The transmitter device is for example an electronic device external to the disclosed audio device, such as another audio device at the far-end. It may be appreciated that the transmitter device may be an electronic device, such as an electronic device comprising an audio device. For example, the transmitter device may comprise a smart-phone and/or a computer, such as a laptop.

The transmitter device can be seen as a device configured to transmit audio signals to an audio device configured to act as a receiver device. The audio output signals provided by the transmitter device can for example be seen as the audio input signal of the receiver device.

In some examples, the audio device may comprise the transmitter device, for example the transmitter device being configured to provide (e.g., transmit) the audio input signal via one or more internal connections of the audio device.

In one or more example audio devices, the audio device is configured to obtain the audio input signal from a far-end, such as a far-end party or user(s). In other words, the transmitter device may be seen as an audio device at a far-end. The audio input signal for example comprises audio. The audio input signal has for example undergone encoding based on one or more encoder parameters, e.g., at the transmitter device.

In one or more embodiments or examples, the audio input signal has undergone signal processing, such as compression and/or enhancement, e.g., at the transmitter device. The audio input signal may be indicative of an audio signal generated by user(s) at the far-end. In other words, the audio input signal may be indicative of speech, such as speech from the far-end transmitter device. The audio input signal may be based on and/or be seen as an output signal of the transmitter device, such as of a signal processor of the transmitter device.

The first signal processor may be configured to operate according to a generative model based on one or more diffusion machine learning techniques. The generative model can for example be seen as a generative model for generative-based signal processing. The generative model can for example be seen as a generative model for codec information-based processing. For example, the generative model may be configured to, e.g., using one or more diffusion machine learning techniques, perform denoising, such as deep noise reduction, and/or echo cancelling.

In one or more example audio devices, the first signal processor comprises machine learning circuitry configured to operate according to a machine learning model, such as a generative model.

The machine learning model may for example comprise or make use of a neural network, artificial intelligence, deep learning, and/or machine learning. The machine learning model may be seen as a model for signal processing. For example, the machine learning model may be seen as a model for decoder output signal processing based on codec information.

In one or more example audio devices and/or audio device systems, the machine learning model comprises model layers including an input layer, one or more intermediate layers, and an output layer for processing of the decoder output signal, such as the input signal. In one or more example audio devices and/or audio device systems, the machine learning model comprises a neural network. In one or more example audio devices and/or audio device systems, the machine learning model comprises neural network layers including an input layer, one or more intermediate layers, and an output layer for processing of the decoder output signal, such as the input signal. In other words, the input layer, the one or more intermediate layers, and/or the output layer may be seen as layers of a machine learning model such as layers of a neural network. The one or more intermediate layers may be considered as hidden layers (such as hidden features). The one or more intermediate layers may include a first intermediate layer.

A model as referred to herein (such as the generative model and/or the non-generative model) may be seen as a model and/or a scheme and/or a mechanism and/or a method configured to process, based on codec information and/or a previous model, one or more input signals, such as decoder output signal and/or signal processor input signals.

In one or more example audio devices and/or audio device systems, the generative model as referred to herein may be stored on a non-transitory storage medium (for example, on the memory of the audio device). The generative model may be stored on a non-transitory storage medium of the audio device being configured to execute the model. In one or more example audio devices and/or audio device systems, the generative model may comprise model data and or computer readable instructions (for example based on the codec information). The generative model data and/or the computer readable instructions may be used by the audio device. The generative model (such as model data and/or the computer readable instructions) may be used by the audio device to process the decoder output signal, such as the audio input signal.

Generative-based signal processing may be seen as signal processing that utilizes generative models to analyze, manipulate, and/or synthesize signals, such as audio signals. Generative models are a type of artificial intelligence model that can learn patterns and structures from existing data and then generate new data that follows similar patterns. These models are trained on a dataset containing examples of the signal type of interest. Once trained, a generative model can be used for various tasks, such as signal denoising, enhancement, and generating novel signals. In the present disclosure, the audio device is configured to apply generative-based signal processing to the decoder output signal based on codec information, such as conditioned with codec information.

Generative-based signal processing may comprise the use of Generative Adversarial Networks (GANs), Variational Autoencoders (VAEs), and/or diffusion models (such as U-net, multiresolution layers, and/or encoder-decoder architectures).

The audio input signal for example comprises one or more signals indicative of an audio. In one or more embodiments or examples, the audio input signal has undergone signal processing, such as encoding, compression, and/or enhancement, at the transmitter device. The audio input signal may be indicative of an audio signal generated by user(s) at the far-end. In other words, the audio input signal may be indicative of speech, such as speech from the far-end transmitter device, and/or other sounds generated at the far-end. The audio input signal may be based on and/or be seen as an output signal of the transmitter device, such as of a signal processor of the transmitter device. For example, the audio input signal can be seen as an encoded audio input signal, encoded at the transmitter device. In other words, the audio input signal may be seen as an audio input that has been encoded by the transmitter device before being transmitted to the receiver device. For example, the audio device is configured to obtain (such as receive and/or retrieve) an encoded audio input signal.

An encoder parameter, such as the one or more encoder parameters, may be seen as a parameter related to the encoding or encoding technique of the audio input signal, e.g., for provision of the encoded audio input signal. In other words, an encoder parameter may be a parameter that the audio input signal has been encoded with, e.g., for provision of the encoded audio input signal. An encoder parameter may comprise one or more of: a sample rate parameter, a bit depth parameter, a channel configuration parameter, a frame size parameter, a filtering parameter, a pre-processing parameter, an audio coding format parameter, a psychoacoustic model parameter, a predictor selection parameter, an entropy coding parameter, and a variable bitrate mode parameter.

The audio device is configured to decode the audio input signal using the decoder and one or more decoder parameters for provision of a decoder output signal. It may be appreciated that the decoder may be configured to decode, extract, and/or obtain the one or more audio signals from the audio input signal.

A decoder parameter, such as the one or more decoder parameters, may be seen as a parameter related to the decoding or decoding technique of the audio input signal, e.g., for provision of the encoded audio input signal. In other words, a decoder parameter may be a parameter that the audio input signal is being decoded with, e.g., for provision of the decoder output signal. A decoder parameter may comprise one or more of: a sample rate conversion parameter, a channel mapping parameter, a downmixing parameter, a bass management parameter, an equalization setting parameter, a reverberation effect parameter, a pitch stretching parameter, a time stretching parameter, a dithering parameter, and a normalization parameter.

The decoder output signal can for example be seen as a first signal processor input signal. In one or more examples, the decoder output signal can be seen as a decoded audio input signal. The decoder output signal for example comprises codec information. In some examples, the codec information may be extracted, e.g., from the decoder output signal, by the decoder.

In some examples, the audio device may be configured to decode the audio input signal using the decoder and one or more decoder parameters for provision of codec information.

In some examples, the codec information may be provided (e.g., transmitted) to the audio device, e.g., via a transmitter device.

The audio device is configured to obtain codec information indicative of the one or more encoder parameters and/or the one or more decoder parameters. Codec information may be seen as information associated with the one or more encoder parameters and/or the one or more decoder parameters. In other words, codec information may comprise the one or more encoder parameters and/or the one or more decoder parameters. Alternatively or additionally, the codec information may be determined based on the one or more encoder parameters and/or the one or more decoder parameters. For example, the codec information may be seen as information describing which codec and/or which codec parameters have been used to encode and/or decode the audio input signal.

It may be appreciated that the codec information may be comprised in the decoder output signal, extracted by the decoder (such as while and/or after decoding the audio input signal), extracted by the codec conditioner as disclosed herein, and/or provided as side information from the transmitter device (e.g., transmitted by the transmitter device to the receiver device as side information to the audio input signal).

The audio device is configured to process, using the first signal processor and based on the codec information, the decoder output signal for provision of a first signal processor output signal.

In some examples, to process the decoder output signal for provision of a first signal processor output signal comprises to generate a first signal processor output signal, e.g., based on the decoder output signal, e.g., using the codec information as a codec conditioner. In one or more example audio devices, the decoder output signal may be seen as a first signal processor input signal.

In some examples, the audio device is configured to process, using the first signal processor and based on the codec information, the decoder output signal for provision of an audio output signal. For example, the first signal processor output signal may comprise an audio output signal. In other words, to process the decoder output signal may comprise to generate a new enhanced signal, e.g., the first signal processor output signal, based on the decoder output signal and using the codec information as conditioning in the processing of the decoder output signal.

It is to be understood that the wording based on as disclosed herein may be seen as or understood as: "as a function of", "as an input to", and/or "depending on". For example, to process the decoder output signal based on the codec information, may be understood as to process the decoder output signal as a function of the codec information, using the codec information as an input in the processing of the decoder output signal, and/or to process the decoder output signal depending on the codec information.

In one or more example audio devices, the codec information comprises one or more of: a codec type, a sampling rate, and a bit rate.

The codec type can for example be seen as indicative of the type of codec according to which the audio input signal is encoded. For example, the audio input signal may be encoded according to one or more codecs, such as codec types (e.g., EVS, MP3, LC3, MP4A, FLAC, etc.).

The sampling rate can for example be seen as the number of samples take per unit time.

The bit rate can for example be seen as the amount of data encoded per unit time.

In one or more example audio devices, to process the decoder output signal using the first signal processor comprises to process the decoder output signal based on one or more of the codec type, the sampling rate, and the bit rate.

To process the decoder output signal using the first signal processor comprises to process the decoder output signal using the first signal processor by applying the generative model, e.g., for codec information-based processing.

For example, the generative model may be configured to process the decoder output signal based on the codec information. For example, the generative model may be configured to process the decoder output signal based on the codec according to which the decoder output signal has previously been encoded and decoded. For example, when the decoder audio signal has been encoded and decoded according to a given codec (e.g., LP3), the decoder output signal may comprise one or more undesirable features (e.g., audio artifacts, defects, etc.) associated with that codec. For example, one or more audio artifacts and/or defects may be generated during encoding and/or decoding of an audio signal (such as the decoder output signal). In some examples, processing the decoder output signal by applying the generative model for codec information-based processing may enable the audio output signal to be processed such as to improve the quality of the first signal processor output signal, such as by processing the decoder output signal in a manner corresponding with the encoding and/or decoding techniques applied to the decoder output signal. This may advantageously enable undesirable features (e.g., audio artifacts and/or defects) of the decoder output signal to be processed with improved accuracy and/or robustness, such as to improve the quality of the first signal processor output signal, e.g., the audio device output signal.

It may be appreciated that by guiding the processing carried out by the first signal processor, the audio device may reduce the introduction of noise and artifacts in the processing of the input signal at the receiver device. In other words, by guiding the processing carried out by the first signal processor, the audio device may reduce the introduction of noise and artifacts in the receiver output signal.

The one or more processors comprisea an audio conditioner configured to process the decoder output signal for provision of one or more audio features. To process the decoder output signal using the first signal processor comprises to process the decoder output signal based on the one or more audio features.

The audio conditioner may be seen as a conditioner for conditioning the processing of the decoder output signal, such as conditioning the processing of the decoder output signal based on one or more audio features. In other words, the audio device may be configured to use the one or more audio features provided by the audio conditioner as inputs or to condition the processing of the decoder output signal by the first signal processor. The audio conditioner may be configured to extract one or more audio features from the decoder output signal. In some examples, the audio conditioner can be seen as a distorted audio conditioner, e.g., configured to identify distorted audio in the decoder output signal. In some examples, the audio conditioner can be seen as a speech conditioner. In some examples, the audio conditioner may be a distorted speech conditioner, e.g., configured to identify distorted speech in the decoder output signal. In one or more examples or embodiments, the audio conditioner may be seen as a pre-processing module for processing the decoder output signal. For example, the audio conditioner may pre-process the decoder output signal for provision of one or more audio features from the decoder output signal which can be provided as inputs or to condition the processing of the decoder output signal by the first signal processor.

The audio conditioner for example comprises a neural network, such as a convolutional neural network, CNN, auto regressive neural network, and/or recurrent neural network, RNN.

In one or more examples, the audio device may be configured to process the decoder output signal by using the one or more audio features as inputs and/or conditioning, e.g., using the first signal processor.

The one or more audio features may be seen as features indicative of one or more audio characteristics of the decoder output signal.

In one or more example audio devices, the one or more processors comprise a codec conditioner configured to determine codec information. It may be appreciated that the codec conditioner may be provided with the payload of the audio input signal and/or the payload of the decoder output signal as input to determine the codec information. In one or more example audio devices, to obtain codec information comprises to determine the codec information using the codec conditioner and to provide the codec information to the first signal processor.

The codec conditioner may be seen as a conditioner for conditioning the processing of the decoder output signal, such as conditioning the processing of the decoder output signal based on the codec information. In other words, the audio device may be configured to use the codec information provided by the codec conditioner as input or to condition the processing of the decoder output signal by the first signal processor. The codec conditioner may be configured to extract one or more audio features from the decoder output signal.

The codec conditioner is for example configured to determine the codec information using a neural network. In some examples, the codec information may be extracted, e.g., from the decoder output signal, by the codec conditioner.

In one or more example audio devices, to obtain codec information comprises to obtain the codec information from the transmitter device.

It may be appreciated that the codec information may be provided by the transmitter device, e.g., comprises in the audio input signal. For example, the codec information may be provided in a header package of the audio input signal and/or accompanying the audio input signal when received from the transmitter device. In other words, the codec information may be obtained via side information comprised in or accompanying the audio input signal. The codec information may be extracted, e.g., by the codec conditioner, from the header package.

The one or more processors comprise a second signal processor configured to operate according to a non-generative model for non-generative-based signal processing. The second signal processor is configured to process a second signal processor input signal for provision of a second signal processor output signal, wherein the second signal processor input signal is based on the decoder output signal. The audio device is configured to process the decoder output signal using the second signal processor. It may be appreciated that the second signal processor may operate in parallel to the first signal processor. The second signal processor input signal may be based on the decoder output signal. For example, the second signal processor may be configured to perform mask-based processing of the decoder output signal.

In one or more example audio devices, the second signal processor comprises a denoiser and/or an echo controller. An echo controller may be seen as a module configured to perform linear echo cancellation and/or residual echo cancellation. The second signal processor may be seen as and/or denoted a deep noise reductor, such as a module using deep noise reduction, DNS. It may be appreciated that the second signal processor may be configured to generate a time-frequency e.g., to enhance one or more characteristics of the input signal, such as enhance the decoder output signal. The second signal processor may be configured to operate according to a non-generative model comprising two Gates Recurrent Units, GRUs, and fully connected dense layers. The second signal processor may be configured to improve signal processing in wide-band mode (WB), in Super Wide-band mode (SWB), and/or in Full-Band mode (FB).

In one or more example audio devices, to process the second signal processor input signal comprises to reduce, e.g., using the second signal processor and/or based on the codec information, a noise of the second signal processor input signal, such as reduce a noise of the decoder output signal. In other words, to process the second signal processor input signal comprises to reduce, using the second signal processor and/or based on the codec information, a noise of the second signal processor input signal for provision of a second signal processor output signal with reduced noise. For example, to process the second signal processor input signal comprises to denoise, using the second signal processor and/or based on the codec information, the second signal processor input signal, e.g., for provision of a denoised first signal processor output signal.

In one or more example audio devices, the second signal processor comprises machine learning circuitry configured to operate according to a machine learning model, such as a non-generative model. It may be appreciated that the second signal processor may be configured to operate according to a machine learning model, such as a non-generative model, for performing mask-based processing, such as using mask-based techniques.

The non-generative model may for example be configured to perform non-generative-based signal processing. In one or more example methods, the non-generative model may be configured to carry out a mask-based method. In other words, the non-generative-based signal processing may comprise a mask-based method. In one or more example audio devices, to reduce the noise of the second signal processor input signal comprises to reduce the noise of the second signal processor input signal based on a mask-based method.

The audio device is configured to determine signal-to-noise ratio information based on the decoder output signal. In other words, the audio device may be configured to determine information indicative of a signal-to-noise ratio, SNR, based on the decoder output signal. SNR information may be seen as information indicative of a SNR of the decoder output signal.

Signal-to-Noise Ratio (SNR) may be seen as a quantitative measure used to assess the quality of a signal relative to the presence of unwanted or irrelevant background noise. SNR may represent the ratio of the power or amplitude of a signal (the "signal" component) to the power or amplitude of the accompanying noise (the "noise" component). A higher SNR value may indicate a stronger, more discernible signal compared to the noise, resulting in better overall signal quality and more accurate data interpretation. In practical terms, a higher SNR generally implies a clearer and more reliable signal that is less likely to be corrupted by unwanted disturbances or interference. It may be appreciated that the SNR information may be determined and/or extracted from audio input signal by the decoder

To process the decoder output signal comprises to process the decoder output signal based on the signal-to-noise ratio information. For example, the audio device may be configured to process the decoder output signal based on the signal-to-noise ratio information and the codec information using the first signal processor and/or the second signal processor.

The audio device comprises a mixer configured to combine the first signal processor output signal and the second signal processor output signal for provision of an audio output signal.

In one or more example audio devices, the first signal processor output signal and the second signal processor output signal may be combined for generating and/or determining the audio device output. In one or more audio devices, the audio device, such as the first signal processor, comprises a mixer configured to combine the first signal processor output signal and the second signal processor output signal for provision of the first signal processor output signal. In this case, the first signal processor output signal may be seen as a mixer output signal. The mixer may for example be configured to add the first signal processor output signal with the second signal processor output signal for provision of the first signal processor output signal. For example, the mixer may be configured to generate a mixer output signal comprising portions of the first signal processor output signal and portions of the second signal processor output signal.

To combine the first signal processor output signal and the second signal processor output signal is based on the signal-to-noise ratio information. By combining the first signal processor output signal and the second signal processor output signal based on the SNR information, it may be possible to combine different portions of the first signal processor output signal and/or of the second signal processor output signal for different regions of the audio input signal. For example, the first signal processor may be used to process regions of the audio input signal with a higher SNR whereas the second signal processor may be used to process regions of the audio input signal with a lower SNR. The mixer may then combine the output of the processing of the different regions by the first signal processor output signal and second signal processor output signal. Formulated differently, the audio device may be configured to combine a regular mask-based enhancement method and condition the first signal processor applying the generative model and the second signal processor using mask-based processing based on the SNR calculated from the audio input signal. This may be beneficial as it is known that mask-based methods are limited in their achievable performance and are saturated at very low or very high SNR cases, hence are limited in their performance. Based on the input SNR information at time-frequency bins, it may be possible to formulate a conditional estimator, such as the mixer, which combines the mask-based output and the generated speech output from the enhancer.

In one or more examples or embodiments, to combine the first signal processor output signal and the second signal processor output signal is based on an uncertainty parameter. For example, the audio device is configured to determine an uncertainty parameter indicative of an uncertainty of processing quality. In other words, the audio device may be configured to determine an uncertainty parameter indicative of an uncertainty in estimating processing quality of the decoder output signal by the first signal processor for provision of the first signal processor output signal. The uncertainty parameter may be indicative of an estimate of the quality of the outcome of the processing of the decoder output signal, such as an estimate of the quality of the first signal processor output signal. Formulated differently, the uncertainty parameter may be indicative of an uncertainty of prediction of the processing of the decoder output signal by the first signal processor as disclosed herein. For example, the uncertainty parameter may be indicative of an uncertainty of prediction of the processing of the decoder output signal by the first signal processor using the generative model as disclosed herein. The uncertainty parameter may be seen as an estimate of how confident the audio device is on the processing quality when using the first signal processor, such as the generative model, for a given input, e.g., for a given decoder output signal. Nevertheless, an uncertainty parameter indicative of a high uncertainty of processing quality may result in a good processing quality of the decoder output signal and vice versa an uncertainty parameter indicative of a low uncertainty of processing quality may result in a poor processing quality of the decoder output signal.

By combining the first signal processor output signal and the second signal processor output signal based on the uncertainty parameter, it may be possible to adjust an audio output based on the first signal processor output signal and/or the second signal processor output signal depending on the uncertainty of processing quality of the first signal processor. For example, when the uncertainty parameter satisfies a certain quality criterion and/or threshold, the audio device may be configured to use the first signal processor output signal for provision of the audio output. On the hand, when the uncertainty parameter does not satisfy the quality criterion and/or threshold, the audio device may be configured to use the second signal processor output signal for provision of the audio output.

The mixer may then combine and/or alternate the first signal processor output signal and second signal processor output signal for provision of the audio output. Formulated differently, the audio device may be configured to combine a regular mask-based enhancement method and condition the first signal processor applying the generative model and the second signal processor using mask-based processing based on the uncertainty parameter.

In one or more example audio devices, the audio device is configured to determine a processing scheme for processing the decoder output signal. A processing scheme may be seen as a structured plan or set of steps that outlines or defines how the decoder output signal is to be processed. In other words, a processing scheme may define a clear framework for applying various processing techniques to the decoder output signal. The steps and/or settings of a processing scheme may be defined or determined during training of the generative model as disclosed herein. A processing scheme may be determined by a scheduler during training of the generative model.

In one or more examples or embodiments, the processing scheme comprises a number of iterations of processing and/or a noise reduction parameter associated with each iteration of processing. A processing scheme may indicate how many iterations of processing of the decoder output signal are required to achieve a certain audio quality of the audio output signal. The processing scheme may determine how many iterations are required and the noise reduction parameter may indicate how much noise is removed on each iteration of processing. The number of iterations and the noise reduction parameter may be fixed numbers or values which are determined during training of the generative model. At each processing iteration of the decoder output signal, the first signal processor may reduce the noise of the decoder output signal by a certain amount in accordance with the noise reduction parameter. The number of iterations may for example be the lowest number of iterations possible where the decoder output signal (such as the processed decoder output signal) meets a quality threshold. For example, the quality threshold may be determined based on a Perceptual Quality Estimator for speech and audio (such as non intrusive quality measure, e.g., DNS MOS and/or Nisqa) technique.

In one or more examples or embodiments, to process the decoder output signal using the first signal processor comprises to process the decoder output signal based on the processing scheme. In other words, to process the decoder output signal may comprise to process the decoder output signal with a certain number of iterations, such as processing iterations with the generative model. For example, to process the decoder output signal may comprise to process the decoder output signal with a certain number of processing iterations each having a certain noise reduction parameter.

In one or more example audio devices, the first signal processor comprises a neural network being a multiresolution network. A multiresolution network can for example be seen as an architecture of the neural network. A multiresolution network is a type of neural network architecture designed to process and analyze data at multiple levels of resolution or scale. This approach is particularly useful when dealing with complex data that exhibit structures or patterns at different scales, such as audio signals and in particular audio signals comprising codecs artifact and noisy audio signals. Multiresolution networks enable the network to capture both fine-grained and coarse-grained information simultaneously, enhancing its ability to understand and represent the underlying features of the data. For example, a multiresolution network can extract features at different time and frequency scales, enhancing the network's ability to understand complex temporal patterns. In other words, the first signal processor may be capable of extracting features at different time and frequency scales. In one or more examples, the multiresolution network is a multiresolution U-net like network.

In one or more examples or embodiments, the first signal processor comprises a signal processing encoder and a signal processing decoder. A signal processing encoder may be seen as a discriminator network. A signal processing decoder may be seen as a generator network. It may be appreciated that the signal processing encoder may be used to map input data to a lower-dimensional latent space, while the signal processing decoder may be used to generate new data from the latent space.

In one or more examples or embodiments, to process the decoder output signal comprises to expand a number of channels and to reduce a time resolution of the decoder output signal using the signal processing encoder, and to reduce a number of channels and to expand a time resolution of the decoder output signal using the signal processing decoder.

A method of operating an audio device configured to act as a receiver device, such as an audio device is disclosed.

The method comprises obtaining an audio input signal from a transmitter device, where the audio input signal is an encoded audio input signal encoded based on one or more encoder parameters.

The method comprises decoding the audio input signal using the decoder and one or more decoder parameters for provision of a decoder output signal.

The method comprises obtaining codec information indicative of the one or more encoder parameters and/or the one or more decoder parameters.

The method comprises processing, e.g., using the first signal processor and based on the codec information, the decoder output signal for provision of a first signal processor output signal, wherein processing the decoder output signal, e.g., using the first signal processor, comprises processing the decoder output signal, e.g., using the first signal processor, by applying the generative model for codec information-based processing.

In one or more example methods, the method comprises processing, e.g., using an audio conditioner of one or more processors of the audio device, the decoder output signal for provision of one or more audio features. In one or more example methods, processing the decoder output signal, e.g., using the first signal processor, comprises processing the decoder output signal based on the one or more audio features.

In one or more example methods, the one or more audio features comprise one or more of: a Bark parameter and a Mel parameter. In one or more example methods, processing the decoder output signal, e.g., using the first signal processor, comprises processing the decoder output signal based on one or more of the Bark parameter and the Mel parameter.

In one or more example methods, the method comprises determining codec information, e.g., using a codec conditioner. In one or more example methods, obtaining codec information comprises determining, e.g., using a codec conditioner of the one or more processors, the codec information and providing the codec information to the first signal processor.

In one or more example methods, obtaining codec information comprises obtaining the codec information from the transmitter device.

In one or more example methods, wherein the codec information comprises one or more of: a codec type, a sampling rate, and a bit rate. In one or more example methods, processing the decoder output signal, e.g., using the first signal processor, comprises processing the decoder output signal based on one or more of the codec type, the sampling rate, and the bit rate.

In one or more example methods, wherein the method comprises operating a second signal processor of the one or more processors according to a non-generative model for non-generative-based signal processing. The method comprises processing, using a second signal processor, a second signal processor input signal for provision of a second signal processor output signal, wherein the second signal processor input signal is based on the decoder output signal. The method comprises processing the decoder output signal using the second signal processor.

The method comprises determining signal-to-noise ratio information based on the decoder output signal, and processing the decoder output signal comprises processing the decoder output signal based on the signal-to-noise ratio information.

The method comprises combining, using a mixer of the audio device, the first signal processor output signal and the second signal processor output signal for provision of an audio output signal, wherein combining the first signal processor output signal and the second signal processor output signal is based on the signal-to-noise ratio information.

In one or more example methods, the method comprises determining a processing scheme for processing the decoder output signal. In one or more example methods, the processing scheme comprises a number of iterations of processing and/or a noise reduction parameter associated with each iteration of processing. In one or more example methods, processing the decoder output signal, e.g., using the first signal processor, comprises processing the decoder output signal based on the processing scheme.

In one or more example methods, the first signal processor comprises a neural network being a multiresolution network. In one or more example methods, the first signal processor comprises a signal processing encoder and a signal processing decoder. In one or more example methods, processing the decoder output signal comprises expanding a number of channels and reducing a time resolution of the decoder output signal e.g., using the signal processing encoder. In one or more example methods, processing the decoder output signal comprises reducing a number of channels and expanding a time resolution of the decoder output signal e.g., using the signal processing decoder.

It is to be understood that a description of a feature in relation to the audio device configured to act as a receiver, is also applicable to the corresponding feature in the system(s) and the method(s) of operating an audio device as disclosed herein.

A computer-implemented method for training a generative model for generative-based signal processing is disclosed. In other words, a computer-implemented method for training a generative model for generative-based signal processing as disclosed herein is disclosed. The method comprises obtaining an audio dataset comprising one or more audio signals. The one or more audio signals may be seen as clean audio signals. An audio dataset may comprise a plurality of audio signals, such as a plurality of audio signal samples used for training.

The method comprises generating a codec distorted audio dataset by encoding, such as using an encoder as disclosed herein, the one or more audio signals encoded based on one or more encoder parameters for provision of one or more encoded audio signals. The method comprises generating a codec distorted audio data set by decoding the one or more encoded audio signals, e.g., using a decoder and one or more decoder parameters for provision of one or more codec distorted audio signals. A codec distorted audio signal may be seen as an audio signal that has been altered or degraded using a certain codec. For example, a codec distorted audio signal may be seen as an audio signal that has been compressed and decompressed using a certain codec. A codec distorted dataset may comprise a plurality of codec distorted audio signals, such as a plurality of codec distorted audio signal samples used for training.

The method comprises combining the one or more audio signals with one or more white noise signals for provision of a white noise audio dataset comprising one or more white noise audio signals. A white noise signal may be seen as a signal comprising one or more clean audio signals and one or more white noise signals, such as one or more clean audio signals combined with one or more white noise signals. A white noise audio dataset may comprise a plurality of white noise audio signals, such as a plurality of white noise audio signal samples used for training.

The method comprises determining, by applying the generative model to the one or more white noise audio signal and the one or more codec distorted audio signals, one or more estimated white noise signals and one or more estimated audio signals. In other words, the generative model may be configured to identify white noise in an audio signal and generate one or more estimated white noise signals based on the identified white noise. The generative model may be configured to identify one or more audio signals based on the white noise audio signal, e.g., among the one or more white noise signals present in the white noise audio signals. For example, the generative model may be configured to separate the one or more audio signals from the one or more white noise signals and in turn determining one or more estimated white noise signals and one or more estimated audio signals.

It may be appreciated that the generative model is trained to learn how to discern between clean audio, e.g., the one or more audio signals, and white noise, e.g., the one or more white noise signals, for a variety of white noise amplitudes and/or white noise combinations.

The method comprises training the generative model based on one or more of: the one or more audio signals, the one or more estimated audio signals, the one or more estimated white noise signals, and the one or white noise signals.

In one or more example methods, the method comprises obtaining codec information indicative of the one or more encoder parameters and/or the one or more decoder parameters. The obtained codec information may then be stored and used by the first signal processor, such as the generative model, when used in operation mode and not training mode. It may be appreciated that the codec information may be mapped to different audio datasets, such as white noise audio datasets and/or codec distorted audio datasets. For example, the codec information may be used when the generative model is trained on several codecs at the same time. It may be appreciated that when training the generative model on one type of codec, the codec information may be embedded in the encoding and the decoding. In one or more examples or embodiments, the generative model may be seen as one large neural network which can be conditioned based on different codec information, such as trained based on different codec information. Alternatively or additionally, the generative model may be seen as a plurality of smaller neural networks each conditioned based on different codec information, such as each neural network trained based on different codec information.

It is to be understood that a description of a feature in relation to the audio device configured to act as a receiver, is also applicable to the corresponding feature in the system(s) and the computer implemented method(s) for training a generative model for generative-based signal processing as disclosed herein.

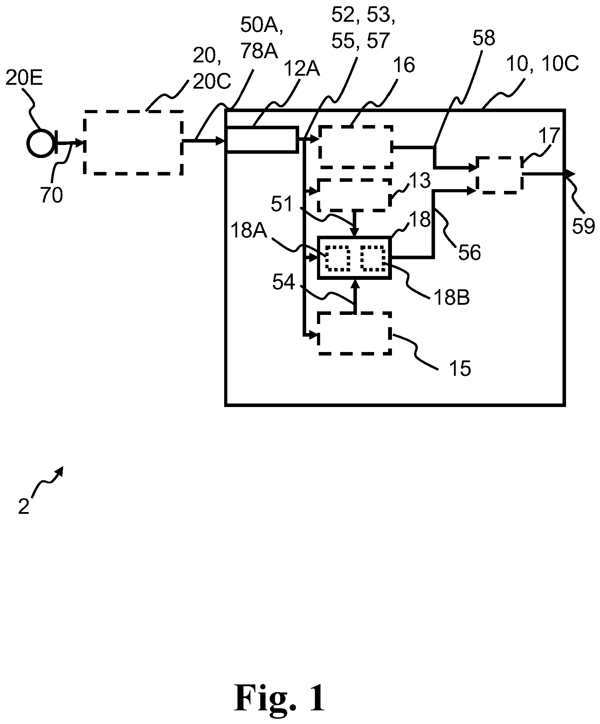

Fig. 1 schematically illustrates an example system, such as an audio device system 2 according to the present disclosure. The audio device system 2 may be seen as an audio communication system. The system 2 may be seen as a communication system for performing calls, such as audio and/or video calls. The system 2, such as communication system, may be seen as a system with codec information-based processing. The audio device system 2 comprises an audio device 10, such as the audio device configured to act as a receiver device as disclosed herein and an audio device 20, such as the audio device configured to act as a transmitter device as disclosed herein.

The audio device 10 is configured to act as receiver device. In other words, the audio device is configured to receive input signals (e.g., audio input signals) from the audio device 20 configured to act as a transmitter device.

The audio device 10 may be seen as an audio device configured to obtain audio signals, output audio signals, and process audio signals. The audio device 10 may be seen as a conference audio device, e.g., configured to be used by a party (such as one or more users at a near-end) to communicate with one or more other parties (such as one or more users at a far-end). The audio device 10 may be seen as a smart audio device. The audio device 10 may be used for communication, conference, and/or a meeting between two or more parties being remote from each other. The audio device 10 may be used by one or more users in a vicinity of where the audio device 10 is located, also referred to as a near-end. In the present examples, the receiver end may be seen as the near-end and the transmitter end may be seen as the far-end.

The audio device 20 is configured to transmit transmitter output signal 78A to an audio device configured to act as a receiver device, such as audio device 10. The audio device 20 comprises an interface, an audio speaker, a microphone 20E, a processor 20C, and a memory. The audio device 10 may for example be a headset, a computer, a smartphone, etc.

The audio device 20 is configured to obtain, via the microphone 20E, a microphone input signal 70. The microphone input signal 70 may be indicative of an audio signal generated by user(s) at the far-end (such as transmitter end). In other words, the microphone input signal 70 may be indicative of speech, such as speech from the far-end transmitter device 20.

The audio device 20 is configured to determine, based on the microphone input signal 70 a transmitter device output signal 78A. In one or more embodiments or examples, the microphone input signal 70 may undergo signal processing, such as encoding, compression, and/or enhancement, at the transmitter device 20.

The audio device 20 is configured to output, via the interface to a receiver device (such as audio device 10), the transmitter output signal 78A. To output the transmitter output signal 78A may comprise to output the transmitter output signal 78A to the receiver audio device 10.

The audio device 10 is configured to obtain an audio input signal from a transmitter device (e.g., audio device 10), where the audio input signal 50A is an encoded audio input signal encoded based on one or more encoder parameters. The audio device 10 is configured to obtain, e.g., using the processor 10C and/or via the interface, an audio input signal 50A from the transmitter device 20. In one or more example audio devices, the audio device 10 is configured to obtain the audio input signal 50A from a far-end, such as a far-end party or user(s). In other words, the transmitter device 20 may be seen as an audio device at a far-end. The audio input signal 50A comprises audio. For example, the audio input signal 50A comprises one or more audio input signals. In one or more embodiments or examples, the audio input signal 50A has undergone signal processing, such as encoding, compression, and/or enhancement, at the transmitter device 20. The audio input signal 50A may be indicative of an audio signal generated by user(s) at the far-end. In other words, the audio input signal 50A may be indicative of speech, such as speech from the far-end transmitter device. The audio input signal 50A may be based on and/or be seen as a transmitter output signal 78A of the transmitter device 20.

The audio device 10 comprises a processor 10C. The processor 10C comprises a decoder 12A and a first signal processor 18. The decoder 12A may be implemented as hardware and/or software on the audio device 10. The decoder 12A may be seen as a module configured to convert and/or decode an audio input signal 50A from the transmitter device 20 to a decoder output signal. In other words, the decoder 12A may be configured to decompress audio the input signal 50A from the transmitter device 20. For example, a decoder may be configured to convert and/or decode the input signal 50A from the transmitter device 20 to an audio signal.

The processor 10C, such as the first signal processor 18, is for example configured to operate according to a generative model for generative-based signal processing.

The audio device 10 is configured to decode the audio input signal 50A using the decoder 12A and one or more decoder parameters for provision of a decoder output signal 52. The audio device 10 is for example configured to decode the audio input signal 50A by operating the decoder according to one or more decoder parameters. The decoder output signal 52 is for example based on the audio input signal 50A. In other words, the decoder output signal 52 may be seen as a decoded output signal. The decoder 12A may be configured to process, such as decode, the audio input signal 50A for provision of the decoder output signal 52. The audio input signal 50A may also be seen as a decoder input signal.

It may be appreciated that the decoder 12A may be configured to decode, extract, and/or obtain the one or more audio signals and/or the first signal parameter from the audio input signal 50A.

The audio device 10 is configured to obtain codec information 57 indicative of the one or more encoder parameters and/or the one or more decoder parameters. In one or more example audio devices, the decoder output signal 52, e.g., decoded using the decoder 12A, comprises the codec information 57. For example, the audio device 10 may extract the codec information 57 from the decoder output signal 52, e.g., using the first signal processor 18 and/or the decoder 12A.

The audio device is configured to process, using the first signal processor 18 and based on the codec information, the decoder output signal 52 for provision of a first signal processor output signal 56. To process the decoder output signal 52 using the first signal processor 18 comprises to process the decoder output signal 52 using the first signal processor 18 by applying the generative model for codec information-based processing.

In one or more example audio devices, the audio device 10 is configured to determine a receiver output 59 based on the processing of the decoder output signal 52.

In one or more example audio devices, the first signal processor 18 is configured to process a first signal processor input signal 53 for provision of a first signal processor output signal 56.

The first signal processor input signal 53 is for example based on and/or correspond to the decoder output signal 52. In other words, the first signal processor 18 may receive and/or obtain the decoder output signal 52 directly from the decoder 12A.

In one or more example audio devices, the one or more processors comprise an audio conditioner 13 configured to process the decoder output signal 52 for provision of one or more audio features. The audio conditioner 13 may be configured to provide 51 the one or more audio features to the first signal processor 18. In one or more example audio devices, to process the decoder output signal 52 using the first signal processor 18 comprises to process the decoder output signal 52 based on the one or more audio features.

In one or more example audio devices, the one or more audio features comprise one or more of: a Bark parameter and a Mel parameter. In one or more example audio devices, to process the decoder output signal 52 using the first signal processor 18 comprises to process the decoder output signal 52 based on one or more of the Bark parameter and the Mel parameter.

In one or more example audio devices, the one or more processors comprise a codec conditioner 15 configured to determine codec information 57. In one or more example audio devices, to obtain codec information 57 comprises to determine the codec information 57 using the codec conditioner 15 and to provide 54 the codec information to the first signal processor 18.

In one or more example audio devices, to obtain codec information 57 comprises to obtain the codec information 57 from the transmitter device 20.

In one or more example audio devices, the codec information 57 comprises one or more of: a codec type, a sampling rate, and a bit rate. In one or more example audio devices, to process the decoder output signal 52 using the first signal processor 18 comprises to process the decoder output signal 52 based on one or more of the codec type, the sampling rate, and the bit rate.

In one or more example audio devices, the one or more processors comprise a second signal processor 16 configured to operate according to a non-generative model for non-generative-based signal processing, the second signal processor 16 being configured to process a second signal processor input signal 55 for provision of a second signal processor output signal 58, wherein the second signal processor input signal 55 is based on the decoder output signal 52, and wherein the audio device 10 is configured to process the decoder output signal 52 using the second signal processor 16.

The processor 10C comprises the second signal processor 16. In one or more example audio devices, the second signal processor 16 is configured to operate according to a non-generative model for non-generative based signal processing. Thereby, both the first signal processor 14 and the second signal processor 16 may be configured to operate according to non-generative and/or generative models with different characteristics that may take into account the weaknesses of each other.

In one or more example audio devices, the second signal processor 16 is configured to process a second signal processor input signal 55 for provision of a second signal processor output signal 58. The audio device 10 may be configured to output an audio device output 59 based on the second signal processor output signal 58. In one or more example audio devices, the second signal processor output signal 58 may be seen as the audio device output 59.

In one or more example audio devices, the second signal processor output signal 58 may be seen as a first signal processor input signal 53. In other words, the position of the first signal processor 18 and the second signal processor 16 may be exchanged in Fig.1.

In one or more example audio devices, the audio device 10 is configured to determine signal-to-noise ratio information based on the decoder output signal 52, and wherein to process the decoder output signal 52 comprises to process the decoder output signal 52 based on the signal-to-noise ratio information.

In one or more example audio devices, the audio device 10 comprises a mixer 17 configured to combine the first signal processor output signal 56 and the second signal processor output signal 58 for provision of an audio output signal 59, wherein to combine the first signal processor output signal 56 and the second signal processor output signal 58 is based on the signal-to-noise ratio information.

In one or more example audio devices, the audio device is configured to determine a receiver output 59, such as an audio device output signal, based on the first signal processor output signal 56 and/or the second signal processor output signal 58. By combining the processing of the first signal processor 18 and the second signal processor 16 the signal processing of the audio input signal 50A, such as of the decoder output signal 52, may be improved, such as enhanced.

In one or more example audio devices, the audio device 10 is configured to determine a processing scheme for processing the decoder output signal 52, wherein the processing scheme comprises a number of iterations of processing and/or a noise reduction parameter associated with each iteration of processing, and wherein to process the decoder output signal 52 using the first signal processor comprises to process the decoder output signal based on the processing scheme.

In one or more example audio devices, the first signal processor comprises 18 a neural network being a multiresolution network, wherein the first signal processor 18 comprises an signal processing encoder 18A and a signal processing decoder 18B, wherein to process the decoder output signal 52 comprises to expand a number of channels and to reduce a time resolution of the decoder output signal 52 using the signal processing encoder 18A, and to reduce a number of channels and to expand a time resolution of the decoder output signal using the signal processing decoder 18B.

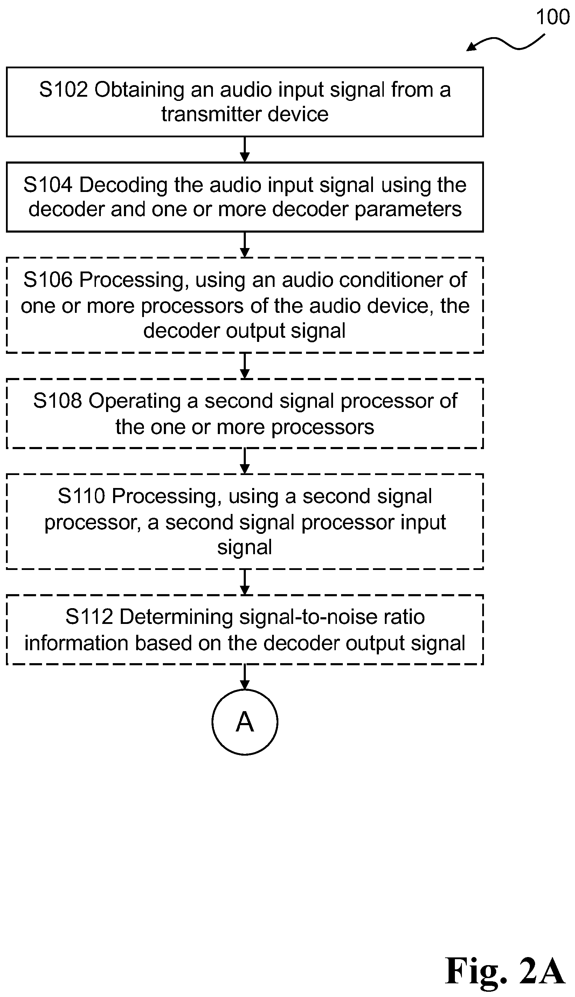

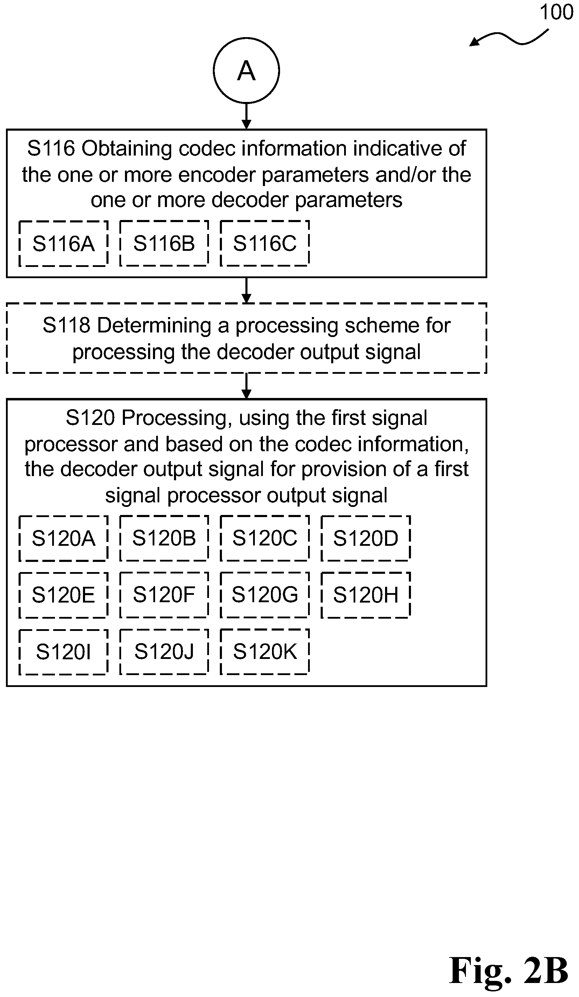

The audio device 10 may be configured to perform any of the methods disclosed in Figs. 2A-B.

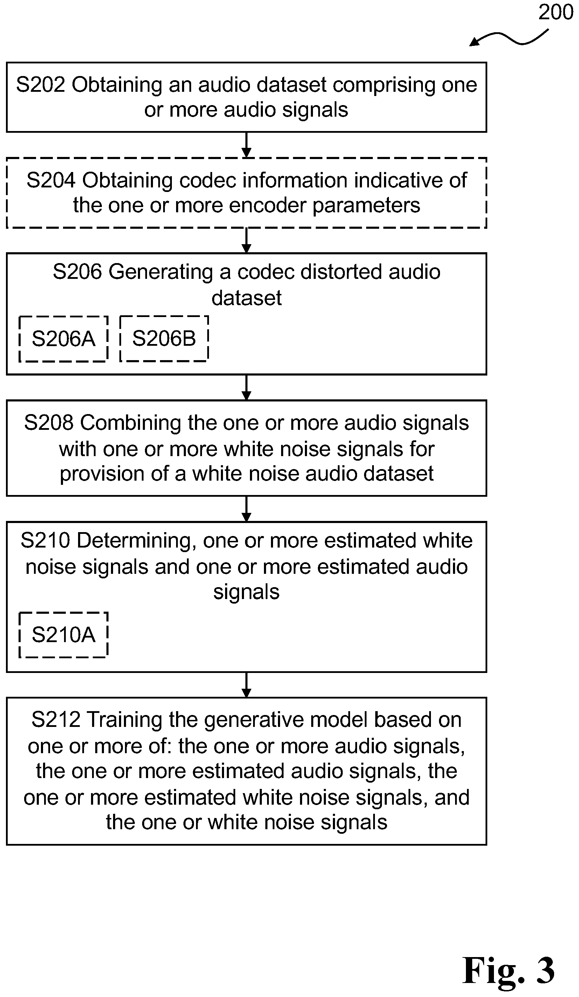

The processor 10C is optionally configured to perform any of the operations disclosed in Fig. 2A-2B, and 3 (such as any one or more of: S106, S108, S110, S112, S114, S116A, S116B, S116C, S118, S120A, S120B, S120C, S120D, S120E, S120F, S120G, S120H, S120I, S120J, S120K, S206A, S206B, S210A).

The operations of the audio device 10 may be embodied in the form of executable logic routines (for example, lines of code, software programs, etc.) that are stored on a non-transitory computer readable medium (for example, memory) and are executed by the processor 10C).

Furthermore, the operations of the audio device 10 may be considered a method that the audio device 10 is configured to carry out. Also, while the described functions and operations may be implemented in software, such functionality may as well be carried out via dedicated hardware or firmware, or some combination of hardware, firmware and/or software.

Memory of the audio device may be one or more of a buffer, a flash memory, a hard drive, a removable media, a volatile memory, a non-volatile memory, a random access memory (RAM), or other suitable device. In a typical arrangement, memory may include a non-volatile memory for long term data storage and a volatile memory that functions as system memory for the processor 10C. The memory may exchange data with the processor 10C over a data bus. Control lines and an address bus between the memory and the processor 10C also may be present (not shown in Fig. 1). The memory is considered a non-transitory computer readable medium.

The memory may be configured to store information such as input signal(s), signal parameter(s), receiver configuration(s), model(s), generative models, non-generative models, codec information, encoder parameters, decoder parameters, audio features, and/or receiver configuration parameter(s) as disclosed herein in a part of the memory.

The audio device 20 may be configured to perform any of the methods disclosed in Fig. 3.

The operations of the audio device 20 may be embodied in the form of executable logic routines (for example, lines of code, software programs, etc.) that are stored on a non-transitory computer readable medium (for example, memory) and are executed by the processor 10C).

Furthermore, the operations of the audio device 20 may be considered a method that the audio device 10 is configured to carry out and vice-versa. Also, while the described functions and operations may be implemented in software, such functionality may as well be carried out via dedicated hardware or firmware, or some combination of hardware, firmware and/or software.

The system 2 may be configured to perform any of the methods disclosed in Figs. 2A-2B and Fig. 3.

Furthermore, the operations of the system 2 may be considered a method that the system 2 is configured to carry out. Also, while the described functions and operations may be implemented in software, such functionality may as well be carried out via dedicated hardware or firmware, or some combination of hardware, firmware and/or software.

Figs. 2A-B show a flow diagram of an example method, such as a method 100, according to the present disclosure.

A method 100 of operating an audio device configured to act as a receiver device, such as an audio device is disclosed.

The method comprises obtaining S102 an audio input signal from a transmitter device, where the audio input signal is an encoded audio input signal encoded based on one or more encoder parameters.

The method comprises decoding S104 the audio input signal using the decoder and one or more decoder parameters for provision of a decoder output signal.

The method comprises obtaining S116 codec information indicative of the one or more encoder parameters and/or the one or more decoder parameters; and The method comprises processing S120, e.g., using the first signal processor and based on the codec information, the decoder output signal for provision of a first signal processor output signal, wherein processing S120 the decoder output signal, e.g., using the first signal processor, comprises processing the decoder output signal, e.g., using the first signal processor, by applying S120A the generative model for codec information-based processing.

In one or more example methods, the method comprises processing S106, e.g., using an audio conditioner of one or more processors of the audio device, the decoder output signal for provision of one or more audio features. In one or more example methods, processing S120 the decoder output signal, e.g., using the first signal processor, comprises processing S120B the decoder output signal based on the one or more audio features.

In one or more example methods, the one or more audio features comprise one or more of: a Bark parameter and a Mel parameter. In one or more example methods, processing S120 the decoder output signal, e.g., using the first signal processor, comprises processing S120C the decoder output signal based on one or more of the Bark parameter and the Mel parameter.

In one or more example methods, the method comprises determining S116A codec information, e.g., using a codec conditioner. In one or more example methods, obtaining S116 codec information comprises determining S116A, e.g., using a codec conditioner of the one or more processors, the codec information and providing S116B the codec information to the first signal processor.

In one or more example methods, obtaining S116 codec information comprises obtaining S116C the codec information from the transmitter device.

In one or more example methods, wherein the codec information comprises one or more of: a codec type, a sampling rate, and a bit rate. In one or more example methods, processing S120 the decoder output signal, e.g., using the first signal processor, comprises processing S120D the decoder output signal based on one or more of the codec type, the sampling rate, and the bit rate.

In one or more example methods, wherein the method comprises operating S108 a second signal processor of the one or more processors according to a non-generative model for non-generative-based signal processing. In one or more example methods, the method comprises processing S110, using a second signal processor, a second signal processor input signal for provision of a second signal processor output signal. In one or more example methods, the second signal processor input signal is based on the decoder output signal. In one or more example methods, the method comprises processing S112 the decoder output signal using the second signal processor.

In one or more example methods, the method comprises determining S114 signal-to-noise ratio information based on the decoder output signal. In one or more example methods, processing S120 the decoder output signal comprises processing S120E the decoder output signal based on the signal-to-noise ratio information.

In one or more example methods, the method comprises combining S122, e.g., using a mixer of the audio device, the first signal processor output signal and the second signal processor output signal for provision of an audio output signal. In one or more example methods, combining the first signal processor output signal and the second signal processor output signal is based on the signal-to-noise ratio information.

In one or more example methods, the method comprises determining S118 a processing scheme for processing the decoder output signal. In one or more example methods, the processing scheme comprises a number of iterations of processing and/or a noise reduction parameter associated with each iteration of processing. In one or more example methods, processing S120 the decoder output signal, e.g., using the first signal processor, comprises processing S120F the decoder output signal based on the processing scheme.

In one or more example methods, the first signal processor comprises a neural network being a multiresolution network. In one or more example methods, the first signal processor comprises a signal processing encoder and a signal processing decoder. In one or more example methods, processing S120 the decoder output signal comprises expanding S120G a number of channels and reducing S120H a time resolution of the decoder output signal e.g., using the signal processing encoder. In one or more example methods, processing the decoder output signal comprises reducing S1201 a number of channels and expanding S120J a time resolution of the decoder output signal e.g., using the signal processing decoder.

Fig. 3 is a flow diagram of an example method, such as a method 200, according to the present disclosure.

A computer-implemented method 200 for training a generative model for generative-based signal processing is disclosed. The method comprises obtaining S202 an audio dataset comprising one or more audio signals.

The method comprises generating S206 a codec distorted audio dataset by encoding S206A the one or more audio signals encoded based on one or more encoder parameters for provision of one or more encoded audio signals. The method comprises generating S206 a codec distorted audio data set by decoding S206B the one or more encoded audio signals, e.g., using a decoder and one or more decoder parameters for provision of one or more codec distorted audio signals.

The method comprises combining S208 the one or more audio signals with one or more white noise signals for provision of a white noise audio dataset comprising one or more white noise audio signals;

The method comprises determining S210, by applying S210A the generative model to the one or more white noise audio signal and the one or more codec distorted audio signals, one or more estimated white noise signals and one or more estimated audio signals; and
The method comprises training S212 the generative model based on one or more of: the one or more audio signals, the one or more estimated audio signals, the one or more estimated white noise signals, and the one or white noise signals.

In one or more example methods, the method comprises obtaining S204 codec information indicative of the one or more encoder parameters and/or the one or more decoder parameters.

The use of the terms "first", "second", "third" and "fourth", "primary", "secondary", "tertiary" etc. does not imply any particular order, but are included to identify individual elements. Moreover, the use of the terms "first", "second", "third" and "fourth", "primary", "secondary", "tertiary" etc. does not denote any order or importance, but rather the terms "first", "second", "third" and "fourth", "primary", "secondary", "tertiary" etc. are used to distinguish one element from another. Note that the words "first", "second", "third" and "fourth", "primary", "secondary", "tertiary" etc. are used here and elsewhere for labelling purposes only and are not intended to denote any specific spatial or temporal ordering. Furthermore, the labelling of a first element does not imply the presence of a second element and vice versa.

It may be appreciated that the Figures comprise some circuitries or operations which are illustrated with a solid line and some circuitries, components, features, or operations which are illustrated with a dashed line. Circuitries or operations which are comprised in a solid line are circuitries, components, features or operations which are comprised in the broadest example. Circuitries, components, features, or operations which are comprised in a dashed line are examples which may be comprised in, or a part of, or are further circuitries, components, features, or operations which may be taken in addition to circuitries, components, features, or operations of the solid line examples. It should be appreciated that these operations need not be performed in order presented. Furthermore, it should be appreciated that not all of the operations need to be performed. The example operations may be performed in any order and in any combination. It should be appreciated that these operations need not be performed in order presented. Circuitries, components, features, or operations which are comprised in a dashed line may be considered optional.

Other operations that are not described herein can be incorporated in the example operations. For example, one or more additional operations can be performed before, after, simultaneously, or between any of the described operations.

Certain features discussed above as separate implementations can also be implemented in combination as a single implementation. Conversely, features described as a single implementation can also be implemented in multiple implementations separately or in any suitable sub-combination. Moreover, although features may be described above as acting in certain combinations, one or more features from a claimed combination can, in some cases, be excised from the combination, and the combination may be claimed as any sub-combination or variation of any sub-combination.

It is to be noted that the word "comprising" does not necessarily exclude the presence of other elements or steps than those listed.

It is to be noted that the words "a" or "an" preceding an element do not exclude the presence of a plurality of such elements.

It is to be noted that the term "indicative of" may be seen as "associated with", "related to", "descriptive of", "characterizing", and/or "defining". The terms "indicative of", "associated with" "related to", "descriptive of", "characterizing", and "defining" can be used interchangeably. The term "indicative of" can be seen as indicating a relation. For example, weight data indicative of weight may comprise one or more weight parameters.

It is to be noted that the word "based on" may be seen as "as a function of" and/or "derived from". The terms "based on" and "as a function of" can be used interchangeably. For example, a parameter determined "based on" a data set can be seen as a parameter determined "as a function of" the data set. In other words, the parameter may be an output of one or more functions with the data set as an input.

A function may be characterizing a relation between an input and an output, such as mathematical relation, a database relation, a hardware relation, logical relation, and/or other suitable relations.

It should further be noted that any reference signs do not limit the scope of the claims, that the examples may be implemented at least in part by means of both hardware and software, and that several "means", "units" or "devices" may be represented by the same item of hardware.

## Claims

1. An audio device (10) configured to act as a receiver device, the audio device comprising an interface, an audio speaker, and a microphone, the audio device comprising one or more processors and a memory, the one or more processors comprising a decoder (12A), a first signal processor (18), a second signal processor (16), and an audio conditioner (13), wherein the first signal processor (18) is configured to operate according to a generative model for generative-based signal processing and the second signal processor (16) is configured to operate according to a non-generative model for non-generative-based signal processing, wherein the audio device is configured to:
- obtain an audio input signal (50A) from a transmitter device, where the audio input signal is an encoded audio input signal encoded based on one or more encoder parameters;
- decode the audio input signal (50A) using the decoder (12A) and one or more decoder parameters for provision of a decoder output signal (52), the audio conditioner (13) configured to process the decoder output signal (52) for provision of one or more audio features;
- obtain codec information (57) indicative of the one or more encoder parameters and/or the one or more decoder parameters; and
- process, using the first signal processor and based on the codec information (57), the decoder output signal (52) for provision of a first signal processor output signal (56), wherein to process the decoder output signal using the first signal processor comprises to process the decoder output signal using the first signal processor by applying the generative model for codec information-based processing,
wherein to process the decoder output signal (52) using the first signal processor comprises to process the decoder output signal based on the one or more audio features,
the second signal processor being configured to process a second signal processor input signal (55) for provision of a second signal processor output signal (58), wherein the second signal processor input signal is based on the decoder output signal, and
wherein the audio device (10) is configured to process the decoder output signal (52) using the second signal processor (16),
**characterized in that**
the audio device (10) is configured to determine signal-to-noise ratio information based on the decoder output signal, and wherein to process the decoder output signal comprises to process the decoder output signal based on the signal-to-noise ratio information, and
wherein the audio device (10) comprises a mixer (17) configured to combine the first signal processor output signal (56) and the second signal processor output signal (58) for provision of an audio output signal (59), wherein to combine the first signal processor output signal and the second signal processor output signal is based on the signal-to-noise ratio information.

2. The audio device (10) according to any of the previous claims, wherein the one or more processors comprise a codec conditioner (15) configured to determine codec information, and wherein to obtain codec information comprises to determine the codec information using the codec conditioner (15) and to provide the codec information to the first signal processor (18).

3. The audio device (10) according to any of the previous claims, wherein to obtain codec information comprises to obtain the codec information from the transmitter device.

4. The audio device (10) according to any of the previous claims, wherein the codec information comprises one or more of: a codec type, a sampling rate, and a bit rate, and wherein to process the decoder output signal using the first signal processor comprises to process the decoder output signal based on one or more of the codec type, the sampling rate, and the bit rate.

5. The audio device (10) according to any of the previous claims, wherein the audio device is configured to determine a processing scheme for processing the decoder output signal, wherein the processing scheme comprises a number of iterations of processing and/or a noise reduction parameter associated with each iteration of processing, and wherein to process the decoder output signal using the first signal processor comprises to process the decoder output signal based on the processing scheme.

6. The audio device (10) according to any of the previous claims, wherein the first signal processor comprises a neural network being a multiresolution network, wherein the first signal processor comprises a signal processing encoder and a signal processing decoder, wherein to process the decoder output signal comprises to expand a number of channels and to reduce a time resolution of the decoder output signal using the signal processing encoder, and to reduce a number of channels and to expand a time resolution of the decoder output signal using the signal processing decoder.

7. A method (100) of operating an audio device configured to act as a receiver device, the audio device comprising an interface, an audio speaker, and a microphone, the audio device comprising one or more processors and a memory, the one or more processors comprising a decoder, a first signal processor, a second signal processor, and an audio conditioner, wherein the first signal processor is configured to operate according to a generative model for generative-based signal processing, and wherein the second signal processor is configured to operate according to a non-generative model for non-generative-based signal processing, the method comprising:
- obtaining (S102) an audio input signal from a transmitter device, where the audio input signal is an encoded audio input signal encoded based on one or more encoder parameters;
- decoding (S104) the audio input signal using the decoder and one or more decoder parameters for provision of a decoder output signal;
- processing (S106), using the audio conditioner of the one or more processors of the audio device, the decoder output signal for provision of one or more audio features;
- obtaining (S116) codec information indicative of the one or more encoder parameters and/or the one or more decoder parameters; and
- processing (S120), using the first signal processor and based on the codec information, the decoder output signal for provision of a first signal processor output signal, wherein processing (S120) the decoder output signal using the first signal processor comprises processing the decoder output signal using the first signal processor by applying (S120A) the generative model for codec information-based processing,
wherein processing (S120) the decoder output signal using the first signal processor comprises processing (S120B) the decoder output signal based on the one or more audio features,
the method comprising processing (S110), using the second signal processor, a second signal processor input signal for provision of a second signal processor output signal, wherein the second signal processor input signal is based on the decoder output signal, and processing (S112), using the second signal processor, the decoder output signal,
**characterized in that**
the method comprises determining (S114) signal-to-noise ratio information based on the decoder output signal, and processing the decoder output signal comprises processing (S120E) the decoder output signal based on the signal-to-noise ratio information, and
wherein the audio device comprises a mixer, the method comprising combining (S122), using the mixer, the first signal processor output signal and the second signal processor output signal for provision of an audio output signal, wherein combining the first signal processor output signal and the second signal processor output signal is based on the signal-to-noise ratio information.

## Patentansprüche

1. Ein Audiogerät (10), das als Empfängergerät konfiguriert ist, wobei das Audiogerät eine Schnittstelle, einen Lautsprecher und ein Mikrofon umfasst, wobei das Audiogerät einen oder mehrere Prozessoren und einen Speicher umfasst, wobei der eine oder mehrere Prozessoren einen Decoder (12A), einen ersten Signalprozessor (18), einen zweiten Signalprozessor (16) und einen Audioaufbereiter (13) umfasst, wobei der erste Signalprozessor (18) dazu konfiguriert ist, entsprechend einem generativen Modell für generativ-basierte Signalverarbeitung zu arbeiten, und der zweite Signalprozessor (16) dazu konfiguriert ist, entsprechend einem nicht-generativen Modell für nicht-generativ-basierte Signalverarbeitung zu arbeiten, wobei das Audiogerät dazu konfiguriert ist:
- ein Audioeingangssignal (50A) von einem Sendergerät zu erhalten, wobei das Audioeingangssignal ein codiertes Audioeingangssignal ist, das auf einem oder mehreren Encoderparametern basiert;
- das Audioeingangssignal (50A) unter Verwendung des Decoders (12A) und eines oder mehrere Decoderparameter zu decodieren zur Bereitstellung eines Decoderausgangssignals (52), wobei der Audioaufbereiter (13) dazu konfiguriert ist, das Decoderausgangssignal (52) zu verarbeiten zur Bereitstellung eines oder mehrere Audiomerkmalen;
- Codec-Information (57) zu erhalten, die einen oder mehrere Encoderparameter und/oder einen oder mehrere Decoderparameter anzeigt; und
- das Decoderausgangssignal (52) unter Verwendung des ersten Signalprozessors und basierend auf der Codec-Information (57) zu verarbeiten zur Bereitstellung eines ersten Signalprozessorausgangssignals (56), wobei das Verarbeiten des Decoderausgangssignals unter Verwendung des ersten Signalprozessors das Verarbeiten des Decoderausgangssignals unter Verwendung des ersten Signalprozessors durch Anwenden des generativen Modells für codec-informationsbasierte Verarbeitung umfasst,
wobei das Verarbeiten des Decoderausgangssignals (52) unter Verwendung des ersten Signalprozessors Verarbeiten des Decoderausgangssignals basierend auf einem oder mehreren Audiomerkmalen umfasst,
wobei der zweite Signalprozessor dazu konfiguriert ist, ein zweites Signalprozessoreingangssignal (55) zu verarbeiten zur Bereitstellung eines zweiten Signalprozessorausgangssignals (58), wobei das Signalprozessoreingangssignal auf dem Decoderausgangssignal basiert, und
wobei das Audiogerät (10) dazu konfiguriert ist, das Decoderausgangssignal (52) unter Verwendung des zweiten Signalprozessors (16) zu verarbeiten,
**dadurch charakterisiert, dass**
das Audiogerät (10) dazu konfiguriert ist, Signal-Rauschverhältnisinformation basierend auf dem Decoderausgangssignal zu bestimmen, und wobei das Verarbeiten des Decoderausgangssignals das Verarbeiten des Decoderausgangssignals basierend auf der Signal-Rauschverhältnisinformation umfasst, und
das Audiogerät (10) einen Mischer (17) umfasst, der dazu konfiguriert ist, das erste Signalprozessorausgangssignal (56) und das zweite Signalprozessorausgangssignal (58) zu kombinieren zur Bereitstellung eines Audioausgangssignals (59), wobei das Kombinieren des ersten Signalprozessorausgangssignals und des zweiten Signalprozessorausgangssignals auf der Signal-Rauschverhältnisinformation basiert.

2. Das Audiogerät (10) gemäß einer der vorherigen Ansprüche, wobei der eine oder mehrere Prozessoren einen Codec-Aufbereiter (15) umfasst, der dazu konfiguriert ist, Codec-Information zu bestimmen, und wobei das Erhalten von Codec-Information (57) Bestimmen der Codec-Information unter Verwendung des Codec-Aufbereiters (15) und Bereitstellen der Codec-Information an den ersten Signalprozessor (18) umfasst.

3. Das Audiogerät (10) gemäß einer der vorherigen Ansprüche, wobei das Erhalten von Codec-Information (57) Erhalten der Codec-Information vom Sendergerät umfasst.

4. Das Audiogerät (10) gemäß einer der vorherigen Ansprüche, wobei die Codec-Information einen oder mehrere von: einem Codec-Typ, einer Abtastrate und einer Bitrate umfasst, und wobei das Verarbeiten des Decoderausgangssignals unter Verwendung des ersten Signalprozessors Verarbeiten des Decoderausgangssignals basierend auf einem oder mehreren von dem Codec-Type, der Abtastrate und der Bitrate umfasst.

5. Das Audiogerät (10) gemäß einer der vorherigen Ansprüche, wobei das Audiogerät dazu konfiguriert ist, ein Verarbeitungsschema zur Verarbeitung des Decoderausgangssignals zu bestimmen, wobei das Verarbeitungsschema mehrere Iterationen der Verarbeitung und/oder einen jeder Iteration zugeordneten Rauschunterdrückungsparameter umfasst, und wobei das Verarbeiten des Decoderausgangssignals unter Verwendung des ersten Signalprozessors Verarbeiten des Decoderausgangssignals basierend auf dem Verarbeitungsschema umfasst.

6. Das Audiogerät (10) gemäß einer der vorherigen Ansprüche, wobei der erste Signalprozessor ein neuronales Netzwerk umfasst, das ein Multiresolutionsnetzwerk ist, wobei der erste Signalprozessor einen Signalverarbeitungs-Encoder und einen Signalverarbeitungs-Decoder umfasst, wobei das Verarbeiten des Decoderausgangssignals Erweitern einer Anzahl von Kanälen und Reduzieren einer Zeitauflösung des Decoderausgangssignals unter Verwendung des Signalverarbeitungs-Encoders sowie Reduzieren der Anzahl von Kanälen und Erweitern der Zeitauflösung des Decoderausgangssignals unter Verwendung des Signalverarbeitungs-Decoders umfasst.

7. Ein Verfahren (100) zum Betrieb eines Audiogeräts, das als Empfängergerät konfiguriert ist, wobei das Audiogerät eine Schnittstelle, einen Lautsprecher und ein Mikrofon umfasst, wobei das Audiogerät einen oder mehreren Prozessoren und einen Speicher umfasst, wobei der eine oder mehrere Prozessoren einen Decoder, einen ersten Signalprozessor, einen zweiten Signalprozessor und einen Audioaufbereiter umfasst, wobei der erste Signalprozessor dazu konfiguriert ist, entsprechend einem generativen Modell für generativ-basierte Signalverarbeitung zu arbeiten, und der zweite Signalprozessor dazu konfiguriert ist, entsprechend einem nicht-generativen Modell für nicht-generativ-basierte Signalverarbeitung zu arbeiten, wobei das Verfahren umfasst:
- Erhalten (S102) eines Audioeingangssignals von einem Sendergerät, wobei das Audioeingangssignal ein codiertes Audioeingangssignal ist, das basierend auf einem oder mehreren Encoderparametern kodiert ist;
- Dekodieren (S104) des Audioeingangssignals unter Verwendung des Decoders und einen oder mehrere Decoderparameter zur Bereitstellung eines Decoderausgangssignals;
- Verarbeiten (S106) des Decoderausgangssignals unter Verwendung des Audioaufbereiters des einen oder mehrere Prozessoren des Audiogeräts zur Bereitstellung eines oder mehrere Audiomerkmale;
- Erhalten (S116) von Codec-Information, die einen oder mehrere Encoderparameter und/oder einen oder mehrere Decoderparameter anzeigt; und
- Verarbeiten (S120) des Decoderausgangssignals unter Verwendung des ersten Signalprozessors und basierend auf der Codec-Information zur Bereitstellung eines ersten Signalprozessorausgangssignals, wobei das Verarbeiten (S120) des Decoderausgangssignals unter Verwendung des ersten Signalprozessors Verarbeiten des Decoderausgangssignals unter Verwendung des ersten Signalprozessors durch Anwenden des generativen Modells für codec-informationsbasierte Verarbeitung umfasst,
wobei das Verarbeiten (S120) des Decoderausgangssignal unter Verwendung des ersten Signalprozessors Verarbeiten (S120B) des Decoderausgangssignals basierend auf dem einen oder mehreren Audiomerkmalen umfasst,
wobei das Verfahren Verarbeiten (S110) eines zweiten Signalprozessoreingangssignals unter Verwendung des zweiten Signalprozessors zur Bereitstellung eines zweiten Signalprozessorausgangssignals, wobei das zweite Signalprozessoreingangssignal auf dem Decoderausgangssignal basiert, und Verarbeiten (S112) des Decoderausgangssignals unter Verwendung des zweiten Signalprozessors umfasst,
**dadurch charakterisiert, dass**
das Verfahren Bestimmen (S114) von Signal-Rauschverhältnisinformation basierend auf dem Decoderausgangssignal umfasst, und das Verarbeiten des Decoderausgangssignals Verarbeiten (S120E) des Decoderausgangssignals basierend auf der Signal-Rauschverhältnisinformation umfasst, und
wobei das Audiogerät einen Mischer umfasst, wobei das Verfahren Kombinieren des ersten Signalprozessorausgangssignals und des zweiten Signalprozessorausgangssignals unter Verwendung des Mischers zur Bereitstellung eines Audioausgangssignals umfasst, wobei das Kombinieren des ersten Signalprozessorausgangssignals und des zweiten Signalprozessorausgangssignals auf der Signal-Rauschverhältnisinformation basiert.

## Revendications

1. Un dispositif audio (10) configuré pour agir comme un dispositif récepteur, le dispositif audio comprenant une interface, un haut-parleur audio et un microphone, le dispositif audio comprenant un ou plusieurs processeurs et une mémoire, le un ou plusieurs processeurs comprenant un décodeur (12A), un premier processeur de signal (18), un second processeur de signal (16) et un conditionneur audio (13), où le premier processeur de signal (18) est configuré pour fonctionner selon un modèle génératif de traitement du signal génératif et le second processeur de signal (16) est configuré pour fonctionner selon un modèle non génératif pour le traitement du signal non génératif, dans lequel le dispositif audio est configuré pour :
- obtenir un signal d'entrée audio (50A) d'un dispositif émetteur, où le signal d'entrée audio est un signal d'entrée audio codé encodé sur la base d'un ou plusieurs paramètres d'encodeur ;
- décoder le signal d'entrée audio (50A) en utilisant le décodeur (12A) et d'un ou plusieurs paramètres du décodeur pour fournir un signal de sortie décodeur (52), le conditionneur audio (13) configuré pour traiter le signal de sortie du décodeur (52) afin de fournir une ou plusieurs caractéristiques audio ;
- obtenir des informations de codec (57) indiquant un ou plusieurs paramètres d'encodeur et/ou un ou plusieurs paramètres de décodeur ; et
- traiter, en utilisant le premier processeur de signal et sur la base des informations du codec (57), le signal de sortie décodeur (52) pour fournir un signal de sortie du premier processeur de signal (56), dans lequel traiter le signal de sortie du décodeur en utilisant le premier processeur de signal consiste à traiter le signal de sortie du décodeur en appliquant le modèle génératif pour le traitement basé sur l'information du codec,
où traiter le signal de sortie du décodeur (52) en utilisant le premier processeur de signal consiste à traiter le signal de sortie du décodeur basé sur une ou plusieurs caractéristiques audio,
le second processeur de signal étant configuré pour traiter un second signal d'entrée de processeur de signal (55) afin de fournir un second signal de sortie de processeur de signal (58), où le signal d'entrée du second processeur de signal est basé sur le signal de sortie du décodeur, et
où le dispositif audio (10) est configuré pour traiter le signal de sortie du décodeur (52) en utilisant le second processeur de signal (16),
**caractérisée en ce**
le dispositif audio (10) est configuré pour déterminer l'information du rapport signal/bruit en fonction du signal de sortie du décodeur, et pour traiter le signal de sortie du décodeur comprend le traitement du signal de sortie du décodeur en fonction des informations sur rapport signal/bruit, et
où le dispositif audio (10) comprend un mélangeur (17) configuré pour combiner le premier signal de sortie du processeur de signal (56) et le second signal de sortie du processeur de signal (58) pour fournir un signal de sortie audio (59), où la combinaison du signal de sortie du premier processeur de signal et du second signal est basée sur l'information du rapport signal/bruit.

2. Le dispositif audio (10) selon l'une des revendications précédentes, où un ou plusieurs processeurs constituent un conditionneur de codec (15) configuré pour déterminer les informations de codec, et où obtenir des informations de codec consiste à déterminer les informations de codec en utilisant le conditionneur de codec (15) et à fournir les informations de codec au premier processeur de signal (18).

3. Le dispositif audio (10) selon l'une des revendications précédentes, pour obtenir les informations du codec consiste à obtenir les informations du codec depuis le dispositif émetteur.

4. Le dispositif audio (10) selon l'une des revendications précédentes, où les informations du codec comprennent un ou plusieurs : type de codec, une fréquence d'échantillonnage et un débit binaire, et où traiter le signal de sortie du décodeur en utilisant le premier processeur de signal comprend le traitement du signal de sortie du décodeur en fonction d'un ou plusieurs types de codec, de la fréquence d'échantillonnage et du débit binaire.

5. Le dispositif audio (10) selon l'une des revendications précédentes, où le dispositif audio est configuré pour déterminer un schéma de traitement du signal de sortie du décodeur, où le schéma comprend plusieurs itérations de traitement et/ou un paramètre de réduction du bruit associé à chaque itération de traitement, et où traiter le signal de sortie du décodeur en utilisant le premier processeur de signal comprend de traiter le signal de sortie du décodeur selon le schéma de traitement.

6. Le dispositif audio (10) selon l'une des revendications précédentes, où le premier processeur de signal comprend un réseau de neurones étant un réseau multi-résolution, où le premier processeur de signal comprend un encodeur de traitement du signal et un décodeur de traitement du signal, dans lequel le traitement du signal de sortie du décodeur consiste à étendre un certain nombre de canaux et à réduire la résolution temporelle du signal de sortie du décodeur en utilisant l'encodeur de traitement du signal, ainsi que pour réduire un nombre de canaux et étendre la résolution temporelle du signal de sortie du décodeur en utilisant le décodeur de traitement du signal.

7. Une méthode (100) d'utilisation d'un dispositif audio configuré pour agir comme un dispositif récepteur, le dispositif audio comprenant une interface, un haut-parleur audio et un microphone, le dispositif audio comprenant un ou plusieurs processeurs et une mémoire, un ou plusieurs processeurs comprenant un décodeur, un premier processeur de signal, un second processeur de signal et un conditionneur audio, où le premier processeur de signal est configuré pour fonctionner selon un modèle génératif de traitement du signal basé sur la génération, et où le second processeur de signal est configuré pour fonctionner selon un modèle non génératif pour le traitement du signal non génératif, la méthode comprenant :
- obtenir (S102) un signal d'entrée audio provenant d'un dispositif émetteur, où le signal d'entrée audio est un signal d'entrée audio codé codé sur la base d'un ou plusieurs paramètres d'encodeur ;
- décoder (S104) le signal d'entrée audio en utilisant le décodeur et d'un ou plusieurs paramètres du décodeur pour fournir un signal de sortie ;
- traitement (S106), utilisant le conditionneur audio d'un ou plusieurs processeurs du dispositif audio, le décodeur sort le signal pour fournir une ou plusieurs caractéristiques audio ;
- obtenir (S116) des informations de codec indiquant un ou plusieurs paramètres d'encodeur et/ou un ou plusieurs paramètres de décodeur ; et
- traitement (S120), utilisant le premier processeur de signal et basé sur les informations du codec, le signal de sortie du décodeur pour fournir un signal de sortie du premier processeur de signal, où le traitement (S120) du signal de sortie du décodeur utilisant le premier processeur de signal comprend le traitement du signal de sortie du décodeur en appliquant (S120A) le modèle génératif pour le traitement basé sur l'information du codec,
dans lequel le traitement (S120) du signal de sortie du décodeur utilisant le premier processeur de signal comprend le traitement (S120B) du signal de sortie du décodeur basé sur une ou plusieurs caractéristiques audio,
la méthode comprenant le traitement (S110), utilisant le second processeur de signal, un second signal d'entrée de processeur de signal pour fournir un second signal de sortie de processeur de signal, où le second signal d'entrée du processeur de signal est basé sur le signal de sortie du décodeur, et le traitement (S112), utilisant le second processeur de signal, le signal de sortie décodeur,
**caractérisée en ce**
la méthode consiste à déterminer (S114) les informations sur le rapport signal/bruit à partir du signal de sortie du décodeur, et le traitement du signal de sortie du décodeur comprend le traitement (S120E) du signal de sortie du décodeur basé sur l'information du rapport signal/bruit, et
où le dispositif audio comprend une table de mixage, la méthode comprenant la combinaison (S122), utilisant la table de mixage, le premier signal de sortie du processeur de signal et le second signal de sortie du processeur de signal pour fournir un signal de sortie audio, où la combinaison du signal de sortie du premier processeur de signal et du second signal est basée sur l'information du rapport signal/bruit.
